(19) Europäisches Patentamt
European Patent Office
Office européen des brevets

(11) **EP 4 254 817 A1**

(12) **EUROPEAN PATENT APPLICATION**
published in accordance with Art. 153(4) EPC

(43) Date of publication:
**04.10.2023 Bulletin 2023/40**

(51) International Patent Classification (IPC):
***H04B 7/06*** (2006.01)

(21) Application number: **21899832.6**

(86) International application number:
**PCT/CN2021/130431**

(22) Date of filing: **12.11.2021**

(87) International publication number:
**WO 2022/116798 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.12.2020 CN 202011399803**

(71) Applicant: **ZTE Corporation**
**Shenzhen, Guangdong 518057 (CN)**

(72) Inventors:
• **GONG, Jianbin**
  **Shenzhen, Guangdong 518057 (CN)**
• **LI, Shulin**
  **Shenzhen, Guangdong 518057 (CN)**
• **WANG, Zhipeng**
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **BEAM-FORMING METHOD AND APPARATUS, BASE STATION, AND COMPUTER-READABLE STORAGE MEDIUM**

(57) A beam-forming method and apparatus, a base station, and a computer-readable storage medium. The method comprises: acquiring location information of a terminal and CSI (S 110); determining a DOA angle of an antenna according to the location information (S120); combining antenna information and the DOA angle, and obtaining a first single-polarized DOA weight (S 130); and obtaining a dual-polarized DOA weight of the antenna according to the CSI and the first single-polarized DOA weight (S140), and generating a forming weight comprising polarized information and capable of supporting multistreaming.

FIG. 1

## Description

## CROSS-REFERENCE TO RELATED APPLICATION

This application is filed on the basis of Chinese patent application No. 202011399803.0 filed December 04, 2020, and claims priority to the Chinese patent application, the entire contents of which are incorporated herein by reference.

## TECHNICAL FIELD

The present disclosure relates to the field of communication technologies, and more particularly, to a beam-forming method and apparatus, a base station, and a computer-readable storage medium.

## BACKGROUND

In mobile communication systems, due to the long distance between ground and air, large transmission attenuation and large error of Sounding Reference Symbol (SRS) channel estimation, the calculation of forming weights is inaccurate, and the forming effect by Beam-Forming (BF) is not ideal, ultimately affecting user experience. In a ground-to-air communication system, large-scale antennas are usually used on the base station side, and effective forming can improve the user experience. In a conventional beam-forming method, a base station calculates a relative angle according to location information of the base station and location information of a terminal device, constructs a forming weight according to the angle information and antenna information of the base station, and sends downlink data based on the beam-forming weight. However, this method can only support a single stream and cannot support multiple streams, resulting in unsatisfactory forming effects and affecting the user experience.

## SUMMARY

The following is a summary of the subject matter set forth in this description. This summary is not intended to limit the scope of protection of the claims.

An objective of the present disclosure is to address one of the technical problems in existing technologies at least to a certain extent and provide a beam-forming method and apparatus, a base station, and a computer-readable storage medium.

In accordance with a first aspect of the present disclosure, an embodiment provides a beam-forming method. The method includes: acquiring location information and Channel State Information (CSI) of a terminal device; determining a Direction of Arrival (DOA) angle of an antenna according to the location information; obtaining a first single-polarized DOA weight based on information of the antenna and the DOA angle; and obtaining a dual-polarized DOA weight of the antenna according to the CSI and the first single-polarized DOA weight.

In accordance with a second aspect of the present disclosure, an embodiment provides a beam-forming apparatus. The apparatus includes: an acquisition module, configured for acquiring location information and CSI of a terminal device; an angle determining module, configured for determining a DOA angle of an antenna according to the location information; and a weight determining module, configured for obtaining a first single-polarized DOA weight based on information of the antenna and the DOA angle; and configured for obtaining a dual-polarized DOA weight of the antenna according to the CSI and the first single-polarized DOA weight.

In accordance with a third aspect of the present disclosure, an embodiment provides a base station. The base station includes the beam-forming apparatus in accordance with the second aspect; or includes: a memory, a processor, and a computer program stored in the memory and executable by the processor which, when executed by the processor, causes the processor to implement the beam-forming method in accordance with the first aspect.

In accordance with a fourth aspect of the present disclosure, an embodiment further provides a computer-readable storage medium, storing a computer-executable instruction which, when executed by a processor, causes the processor to implement the beam-forming method in accordance with the first aspect.

## BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure.

FIG. 1 is a flowchart of a beam-forming method according to an embodiment of the present disclosure;

FIG. 2 is a flowchart of a beam-forming method according to another embodiment of the present disclosure;

FIG. 3 is a flowchart of a beam-forming method according to still another embodiment of the present disclosure; and

FIG. 4 is a structural diagram of a beam-forming apparatus according to an embodiment of the present disclosure.

## DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Embodiments of the present disclosure provide a beam-forming method and apparatus, a base station, and a computer-readable storage medium, which can address at least to a certain extent the problem that DOA weights only support a single stream, and obtain a better forming effect in multi-antenna scenarios, thereby improving the user experience.

The embodiments of the present disclosure will be further described in detail below in conjunction with the accompanying drawings.

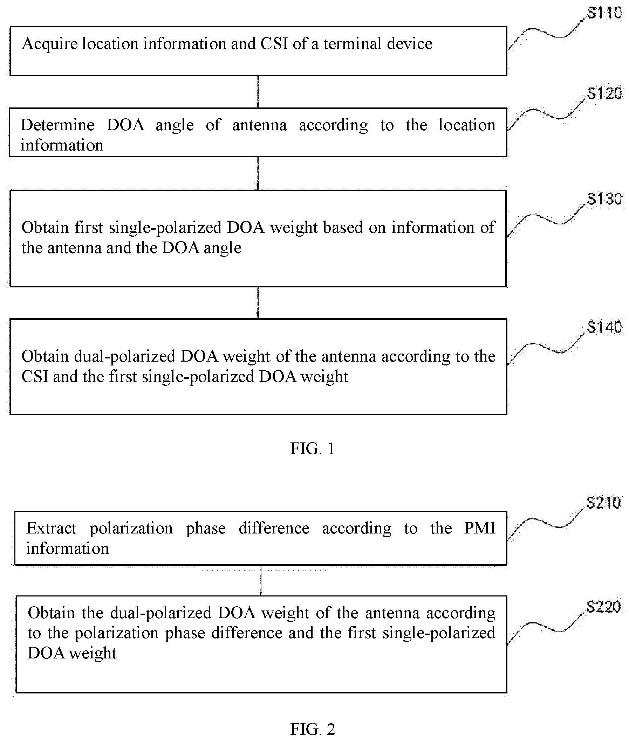

FIG. 1 is a flowchart of a beam-forming method according to an embodiment of the present disclosure. As shown in FIG. 1, the method includes, but not limited to the following steps of S110, S120, S130 and S140.

At S110, location information and Channel State Information (CSI) of a terminal device are acquired.

A base station configures a CSI measurement resource and a reporting resource for a terminal device, to allow the terminal device to report CSI and location information. The CSI reported by the terminal device includes Precoding Matrix Indicator (PMI) information and Rank Indication (RI) information, and may further include Channel Quality Information (CQI), etc.

At S120, a DOA angle of an antenna is determined according to the location information.

After acquiring the location information of the terminal device, the base station calculates a relative angle between the terminal device and the base station based on location information of the base station, to determine the DOA angle of the antenna.

At S130, a first single-polarized DOA weight is obtained based on information of the antenna and the DOA angle.

The base station obtains a single-polarized DOA weight according to the information of the antenna and the DOA angle of the antenna determined in S120, where this single-polarized DOA weight is defined as the first single-polarized DOA weight. It should be noted that the information of the antenna used to calculate the first single-polarized DOA weight mainly includes a number and spacing of antenna elements.

At S140, a dual-polarized DOA weight of the antenna is obtained according to the CSI and the first single-polarized DOA weight.

The base station extracts a polarization phase difference according to the PMI information reported by the terminal device, and obtains the dual-polarized DOA weight of the antenna according to the polarization phase difference and the first single-polarized DOA weight.

According to the beam-forming method provided in this embodiment, by acquiring location information and CSI of a terminal device, determining a DOA angle of an antenna according to the location information, obtaining a first single-polarized DOA weight based on information of the antenna and the DOA angle, and obtaining a dual-polarized DOA weight of the antenna according to the CSI and the first single-polarized DOA weight, a forming weight including polarized information and supporting multiple streams is generated. As such, the problem that DOA weights only support a single stream can be addressed at least to a certain extent, and a better forming effect can be obtained in multi-antenna scenarios, thereby improving the user experience.

Referring to FIG. 2, in the beam-forming method described above, obtaining a dual-polarized DOA weight of the antenna according to the CSI and the first single-polarized DOA weight in S140 includes, but not limited to, following steps of S210 and S220.

At S210, a polarization phase difference is extracted according to the PMI information.

At S220, the dual-polarized DOA weight of the antenna is obtained according to the polarization phase difference and the first single-polarized DOA weight.

In an embodiment, for S210, the CSI reported by the terminal device includes PMI information and RI information, and the corresponding polarization phase difference is calculated by traversing RIs. Details are given as follows.

For *ilayer* =1: RI

$$\varphi(ilayer) = angle(W_{pmi}(k, ilayer))$$

End

where $\varphi$ represents the polarization phase difference, $W_{pmi}$ represents a PMI weight corresponding to the PMI information reported by the terminal device, and k represents a parameter which is set according to a number of ports in the PMI information. When the number of ports configured by a PMI is 2, k generally has a value of 1. When the number of ports configured by a PMI is 8, k generally has a value of 4. For the convenience of illustration, the following description is given using an example where the number of ports configured by the PMI is 2.

At S210, a number of times of calculation is determined according to the RI information, and a corresponding polarization phase difference is obtained according to the PMI information for each calculation. A formula for obtaining the polarization phase difference for each calculation is as follows:

$$\varphi(ilayer) = angle(W_{pmi}(1, ilayer)$$

where *ilayer* represents a current number of times of calculation.

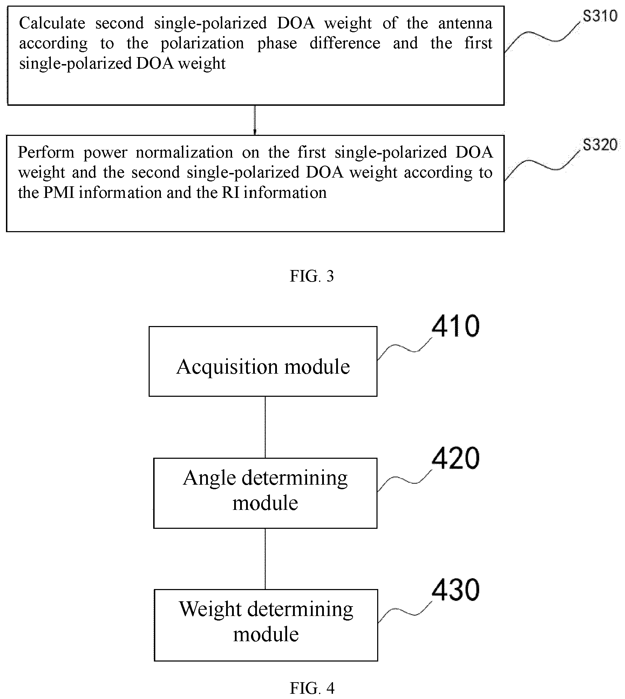

Referring to FIG. 3, obtaining the dual-polarized DOA weight of the antenna according to the polarization phase difference and the first single-polarized DOA weight in S220 includes, but not limited to, following steps of S310, S320 and S320.

At S310, a second single-polarized DOA weight of the antenna is calculated according to the polarization phase difference and the first single-polarized DOA weight.

At S320, power normalization is performed on the first single-polarized DOA weight and the second single-polarized DOA weight according to the PMI information and the RI information.

In an embodiment, in S310, a method for generating the second single-polarized DOA weight is as follows:

For *ilayer* =1: RI

$$\tilde{W}_{DOA}(1:ilayer) = W_{DOA}(1:ilayer) \times \ell^{j\varphi(ilayer)}$$

End

where $\tilde{W}_{DOA}$ represents the second single-polarized DOA weight, and $W_{DOA}$ represents the first single-polarized DOA weight. A main objective of S310 is to calculate a weight of another polarization direction, i.e., the second single-polarized DOA weight.

In addition, at S320, the weights are power normalized according to the PMI information and based on the number of layers, to ensure that a transmit power of the base station is full and does not exceed a power threshold.

Finally, the base station determines a final transmission scheme and a corresponding forming weight according to the RI for sending Physical Downlink Shared Channel (PDSCH) data.

Referring to FIG. 4, in accordance with a second aspect of the present disclosure, an embodiment provides a beam-forming apparatus. The apparatus includes an acquisition module 410, an angle determining module 420, and a weight determining module 430.

The acquisition module 410 is configured for acquiring location information and Channel State Information (CSI) of a terminal device.

A base station configures a CSI measurement resource and a reporting resource for a terminal device, to allow the terminal device to report CSI and location information. The CSI reported by the terminal device includes PMI information and RI information, and may further include CQI, etc.

The angle determining module 420 is configured for determining a DOA angle of an antenna according to the location information.

After acquiring the location information of the terminal device, the base station calculates a relative angle between the terminal device and the base station based on location information of the base station, to determine the DOA angle of the antenna.

The weight determining module 430 is configured for obtaining a first single-polarized DOA weight based on information of the antenna and the DOA angle; and configured for obtaining a dual-polarized DOA weight of the antenna according to the CSI and the first single-polarized DOA weight.

The base station obtains a single-polarized DOA weight according to the information of the antenna and the DOA angle of the antenna determined in S 120, where this single-polarized DOA weight is defined as the first single-polarized DOA weight. The base station extracts a polarization phase difference according to the PMI information reported by the terminal device, and obtains the dual-polarized DOA weight of the antenna according to the polarization phase difference and the first single-polarized DOA weight.

According to the beam-forming apparatus provided in this embodiment, the acquisition module 410 acquires location information and CSI of a terminal device, the angle determining module 420 determines a DOA angle of an antenna according to the location information, and the weight determination module 430 obtains a first single-polarized DOA weight based on information of the antenna and the DOA angle and obtains a dual-polarized DOA weight of the antenna according to the CSI and the first single-polarized DOA weight, thus a forming weight including polarized information and supporting multiple streams is generated. As such, the problem that DOA weights only support a single stream can be addressed at least to a certain extent, and a better forming effect can be obtained in multi-antenna scenarios, thereby improving the user experience.

In the beam-forming apparatus, the CSI acquired by the acquisition module 410 includes PMI information, and obtaining a dual-polarized DOA weight of the antenna according to the CSI and the first single-polarized DOA weight by the weight determining module 430 includes:

- extracting a polarization phase difference according to the PMI information; and

- obtaining the dual-polarized DOA weight of the antenna according to the polarization phase difference and the first single-polarized DOA weight.

In an embodiment, the CSI reported by the terminal device includes PMI information and RI information, and the corresponding polarization phase difference is calculated by traversing RIs, as follows.

For *ilayer* =1: RI

$$\varphi(ilayer) = angle(W_{pmi}(\mathrm{k}, ilayer)$$

End

where $\varphi$ represents the polarization phase difference, $W_{pmi}$ represents a PMI weight corresponding to the PMI information reported by the terminal device, and k represents a parameter which is set according to a number of ports in the PMI information. When the number of ports configured by a PMI is 2, $k$ generally has a value of 1. When the number of ports configured by a PMI is 8, $k$ generally has a value of 4. For the convenience of illustration, the following description is given using an example where the number of ports configured by the PMI is 2.

In the calculation process, a number of times of calculation is determined according to the RI information, and a corresponding polarization phase difference is obtained according to the PMI information for each calculation. A formula for obtaining the polarization phase difference for each calculation is as follows:

$$\varphi(ilayer) = angle(W_{pmi}(1, ilayer)$$

where *ilayer* represents a current number of times of calculation.

In addition, in the beam-forming apparatus, obtaining the dual-polarized DOA weight of the antenna according to the polarization phase difference and the first single-polarized DOA weight includes:

- calculating a second single-polarized DOA weight of the antenna according to the polarization phase difference and the first single-polarized DOA weight; and
- performing power normalization on the first single-polarized DOA weight and the second single-polarized DOA weight according to the PMI information and the RI information.

In an embodiment, a method for generating the second single-polarized DOA weight is as follows:

For *ilayer* =1: RI

$$\tilde{W}_{DOA}(1:ilayer) = W_{DOA}(1:ilayer) \times \ell^{j\varphi(ilayer)}$$

End

where $\tilde{W}_{DOA}$ represents the second single-polarized DOA weight, and $W_{DOA}$ represents the first single-polarized DOA weight. A main objective of S310 is to calculate a weight of another polarization direction, i.e., the second single-polarized DOA weight.

In addition, the weights are power normalized according to the PMI information and based on the number of layers, to ensure that a transmit power of the base station is full and does not exceed a power threshold.

Finally, the base station determines a final transmission scheme and a corresponding forming weight according to the RI for sending Physical Downlink Shared Channel (PDSCH) data.

In accordance with a third aspect of the present disclosure, an embodiment provides a base station. The base station includes the beam-forming apparatus in the above embodiment in accordance with the second aspect; or including:

a memory, a processor, and a computer program stored in the memory and executable by the processor which, when executed by the processor, causes the processor to implement the beam-forming method in accordance with the first aspect, for example, implement the method steps S110 to S140 in FIG. 1, the method steps S210 to S220 in FIG. 2, and the method steps S310 to S320 in FIG. 3.

According to the base station provided in this embodiment, by acquiring location information and CSI of a terminal device, determining a DOA angle of an antenna according to the location information, obtaining a first single-polarized DOA weight based on information of the antenna and the DOA angle, and obtaining a dual-polarized DOA weight of the antenna according to the CSI and the first single-polarized DOA weight, a forming weight including polarized information and supporting multiple streams is generated. As such, the problem that DOA weights only support a single stream can be addressed at least to a certain extent, and a better forming effect can be obtained in multi-antenna scenarios, thereby improving the user experience.

In accordance with a fifth aspect of the present disclosure, an embodiment further provides a computer-readable storage medium, storing a computer-executable instruction which, when executed by a processor, causes the processor to implement the beam-forming method in accordance with the first aspect, for example, implement the method steps S110 to S140 in FIG. 1, the method steps S210 to S220 in FIG. 2, and the method steps S310 to S320 in FIG. 3.

According to the computer-readable storage medium provided in this embodiment, by acquiring location information and CSI of a terminal device, determining a DOA angle of an antenna according to the location information, obtaining a first single-polarized DOA weight based on information of the antenna and the DOA angle, and obtaining a dual-polarized DOA weight of the antenna according to the CSI and the first single-polarized DOA weight, a forming weight including polarized information and supporting multiple streams is generated. As such, the problem that DOA weights only support a single stream can be addressed at least to a certain extent, and a better forming effect can be obtained in multi-antenna scenarios, thereby improving the user experience.

An embodiment of the present disclosure provides a beam-forming method and apparatus, a base station, and a computer-readable storage medium. By acquiring location information and CSI of a terminal device, determining a DOA angle of an antenna according to the location information, obtaining a first single-polarized DOA weight based on information of the antenna and the DOA angle, and obtaining a dual-polarized DOA weight of the antenna according to the CSI and the first single-polarized DOA weight, a forming weight including polarized information and supporting multiple streams is generated. As such, the problem that DOA weights only support a single stream can be addressed at least to a certain extent, and a better forming effect can be obtained in multi-antenna scenarios, thereby improving the user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium or non-transitory medium and a communication medium or transitory medium. As is known to those having ordinary skills in the art, the term "computer storage medium" includes volatile and nonvolatile, removable and non-removable media implemented in any method or technology for storage of information such as computer readable instructions, data structures, program modules, or other data. The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

Although some embodiments of the present application have been described above, the present application is not limited to the implementations described above. Those having ordinary skills in the art can make various equivalent modifications or replacements without departing from the scope of the present application. Such equivalent modifications or replacements fall within the scope defined by the claims of the present application.

## Claims

1. Abeam-forming method, comprising:

   acquiring location information and Channel State Information (CSI) of a terminal device;
   determining a Direction of Arrival (DOA) angle of an antenna according to the location information;
   obtaining a first single-polarized DOA weight based on information of the antenna and the DOA angle; and
   obtaining a dual-polarized DOA weight of the antenna according to the CSI and the first single-polarized DOA weight.

2. The beam-forming method of claim 1, wherein the CSI comprises Precoding Matrix Indicator (PMI) information, and obtaining a dual-polarized DOA weight of the antenna according to the CSI and the first single-polarized DOA weight comprises:

   extracting a polarization phase difference according to the PMI information; and
   obtaining the dual-polarized DOA weight of the antenna according to the polarization phase difference and the first single-polarized DOA weight.

3. The beam-forming method of claim 2, wherein the CSI further comprises Rank Indication (RI) information of a channel, and extracting a polarization phase difference according to the PMI information comprises:
   determining a number of times of calculation according to the RI information, and obtaining a corresponding polarization phase difference according to the PMI information for each calculation.

4. The beam-forming method of claim 3, wherein obtaining the dual-polarized DOA weight of the antenna according to the polarization phase difference and the first single-polarized DOA weight comprises:

   calculating a second single-polarized DOA weight of the antenna according to the polarization phase difference and the first single-polarized DOA weight; and
   performing power normalization on the first single-polarized DOA weight and the second single-polarized DOA weight according to the PMI information and the RI information.

5. Abeam-forming apparatus, comprising:

   an acquisition module, configured for acquiring location information and Channel State Information (CSI) of a terminal device;

an angle determining module, configured for determining a Direction of Arrival (DOA) angle of an antenna according to the location information; and

a weight determining module, configured for obtaining a first single-polarized DOA weight based on information of the antenna and the DOA angle; and configured for obtaining a dual-polarized DOA weight of the antenna according to the CSI and the first single-polarized DOA weight.

6. The beam-forming apparatus of claim 5, wherein the CSI comprises Precoding Matrix Indicator (PMI) information, and obtaining a dual-polarized DOA weight of the antenna according to the CSI and the first single-polarized DOA weight comprises:

extracting a polarization phase difference according to the PMI information; and

obtaining the dual-polarized DOA weight of the antenna according to the polarization phase difference and the first single-polarized DOA weight.

7. The beam-forming apparatus of claim 6, wherein the CSI further comprises Rank Indication (RI) information of a channel, and extracting a polarization phase difference according to the PMI information comprises:

determining a number of calculation times according to the RI information, and obtaining a corresponding polarization phase difference according to the PMI information for each calculation.

8. The beam-forming apparatus of claim 7, wherein obtaining the dual-polarized DOA weight of the antenna according to the polarization phase difference and the first single-polarized DOA weight comprises:

calculating a second single-polarized DOA weight of the antenna according to the polarization phase difference and the first single-polarized DOA weight; and

performing power normalization on the first single-polarized DOA weight and the second single-polarized DOA weight according to the PMI information and the RI information.

9. A base station, comprising the beam-forming apparatus of any one of claims 5 to 8;
or comprising:
a memory, a processor, and a computer program stored in the memory and executable by the processor which, when executed by the processor, causes the processor to perform the beam-forming method of any one of claims 1 to 4.

10. A computer-readable storage medium, storing a computer-executable instruction which, when executed by a processor, causes the processor to perform the beam-forming method of any one of claims 1 to 4.

Acquire location information and CSI of a terminal device — S110

Determine DOA angle of antenna according to the location information — S120

Obtain first single-polarized DOA weight based on information of the antenna and the DOA angle — S130

Obtain dual-polarized DOA weight of the antenna according to the CSI and the first single-polarized DOA weight — S140

FIG. 1

Extract polarization phase difference according to the PMI information — S210

Obtain the dual-polarized DOA weight of the antenna according to the polarization phase difference and the first single-polarized DOA weight — S220

FIG. 2

Calculate second single-polarized DOA weight of the antenna according to the polarization phase difference and the first single-polarized DOA weight

S310

Perform power normalization on the first single-polarized DOA weight and the second single-polarized DOA weight according to the PMI information and the RI information

S320

FIG. 3

Acquisition module

410

Angle determining module

420

Weight determining module

430

FIG. 4

## INTERNATIONAL SEARCH REPORT

| International application No. |
|---|
| **PCT/CN2021/130431** |

| | |
|---|---|
| **A.** | **CLASSIFICATION OF SUBJECT MATTER** |
| | H04B 7/06(2006.01)i |

According to International Patent Classification (IPC) or to both national classification and IPC

| | |
|---|---|
| **B.** | **FIELDS SEARCHED** |

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 波束赋型, 位置, 信道状态信息, 天线, 角度, 极化, 单, 双, 权值, 权重, 相位差, BF, beam forming, position, CSI, antenna, DOA, polarization, single, dual, weight, phase difference, PMI

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 113541756 A (ZTE CORPORATION) 22 October 2021 (2021-10-22) description, paragraphs [0027]-[0092], and figures 1-4 | 1-10 |
| PX | CN 113556162 A (ZTE CORPORATION) 26 October 2021 (2021-10-26) description, paragraphs [0046]-[0141], and figures 1-12 | 1-10 |
| A | CN 106034307 A (ZTE CORPORATION) 19 October 2016 (2016-10-19) description, paragraphs [0042]-[0101], and figures 1-4 | 1-10 |
| A | WO 2020075094 A1 (ERICSSON TELEFON AB L M et al.) 16 April 2020 (2020-04-16) entire document | 1-10 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2022** | **30 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 113541756 | A | 22 October 2021 | None | | | |
| CN | 113556162 | A | 26 October 2021 | None | | | |
| CN | 106034307 | A | 19 October 2016 | WO | 2016145916 | A1 | 22 September 2016 |
| WO | 2020075094 | A1 | 16 April 2020 | EP | 3864760 | A1 | 18 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011399803